Europäisches Patentamt

European Patent Office

Office européen des brevets

(11) Publication number: **0 526 418 B1**

# EUROPEAN PATENT SPECIFICATION

(45) Date of publication of patent specification: **06.09.95**

(51) Int. Cl.6: **B62D 7/14**, B62D 7/15, G05B 9/03

(21) Application number: **92830378.3**

(22) Date of filing: **14.07.92**

(54) **System for the inherently safe control of the steering of the rear wheels of a motor vehicle.**

(30) Priority: **31.07.91 IT TO910612**

(43) Date of publication of application:
**03.02.93 Bulletin 93/05**

(45) Publication of the grant of the patent:
**06.09.95 Bulletin 95/36**

(84) Designated Contracting States:
**DE ES FR GB IT SE**

(56) References cited:
**EP-A- 0 222 047**
**EP-A- 0 352 759**
**EP-A- 0 371 851**
**WO-A-89/10865**

**PATENT ABSTRACTS OF JAPAN vol. 012, no. 428 (M-762)11 November 1988 & JP-A-63 162 378 (TOYOTA) 5 July 1988**

**PATENT ABSTRACTS OF JAPAN vol. 012, no. 001 (M-656)6 January 1988 &JP-A-62 166 161 (TOYOTA) 22 July 1987**

(73) Proprietor: **FIAT AUTO S.p.A.**
**Corso Giovanni Agnelli 200**
**I-10135 Torino (IT)**

(72) Inventor: **Gianoglio, Renato**
**Corso Luigi Einaudi, 26**
**I-10128 Torino (IT)**
Inventor: **Lupo, Giorgio**
**Via Domodossola, 10**
**I-10040 Rivalta (Torino) (IT)**

(74) Representative: **Ouinterno, Giuseppe et al**
**c/o JACOBACCI & PERANI S.p.A.**
**Corso Regio Parco, 27**
**I-10152 Torino (IT)**

**Description**

This invention relates to a system for the inherently safe (fault-tolerant) control of the steering of the rear wheels of a motor vehicle, which can be used in particular in a four-wheel steering system (4WS). Such systems are known e.g. from EP-A-0 352 759 and WO-A-89/10865.

The object of this invention is to produce a control system for the steering of the rear wheels of a motor vehicle representing an optimum compromise between the requirements of high performance, safety in the event of breakdown of one or more parts of the system, and low production costs.

This problem is solved according to the invention by means of a system that comprises:

- actuator means including a movable element adapted to steer the said rear wheels;
- electric control means associated with the said actuator means and adapted to displace the said movable element, the said control means comprising first and second driver stages adapted to effect, together or separately, the controlled activation of the said actuator means according to the characteristics of first and second control signals respectively applied to their respective inputs, the said control means further comprising safety means adapted to displace and maintain the said movable element in a predetermined neutral position, corresponding to no steering of the said wheels, when one enabling signal fails to reach an enabling input of the said control means;
- first and second position sensors adapted to provide respective electric signals indicating the actual position of the said movable element, and
- first and second electronic processing and control means, independent from one another, coupled by a communication channel, and connected to the said first and second driver stages respectively, to the enabling input of the control means and to both of the position sensors,

each of the said first and second processing and control means being adapted to:

- receive the signals provided by the said position sensors and verify the congruence thereof;
- compare the position information provided by each position sensor with a theoretical position calculated on the basis of the desired position of the said control element and according to a mathematical model of the said actuator means stored in each of the said processing and control means;
- detect, on the basis of the said verification and the said comparison, possible breakdown of one of the said sensors and/or one of the said driver stages and/or the said actuator means;
- provide at the associated driver stage a respective control signal generated according to the difference between a reference position of the control element and its actual position detected by the respective associated position sensor when the said position sensors are operating correctly, and generated according to the difference between the reference position and the actual position detected by the surviving sensor when one of the said sensors is in a state of breakdown;
- disable the driver stage which may be in a state of breakdown and, in this case, control the actuator solely by means of the surviving driver stage, and
- interrupt the enabling signal at the said control means if a state of breakdown of the said actuator means is detected.

Other features and advantages of the system according to the invention will be clear from the following detailed description given with reference to the accompanying drawings, provided purely by way of a non-limiting example, in which:

Figure 1          is a block diagram of a control system according to the invention;
Figure 2          is a hydraulic diagram of part of the system shown in Figure 1, and
Figures 3 and 4   are functional diagrams showing the control methods effected in the system according to the invention.

The control system for the steering of the rear wheels of a motor vehicle which will be described must satisfy the requirement of inherently safe operation, that is, it must be "fault-tolerant" under any operating conditions, in order to ensure acceptable functioning, even under the worst conditions of damage.

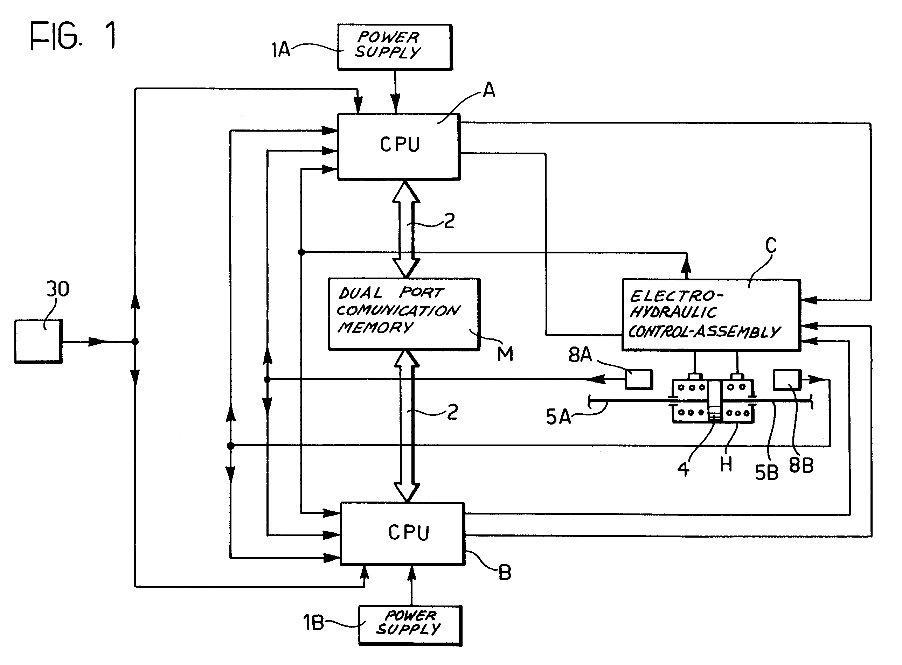

To this end, as will be clear from Figure 1, the architecture of the hardware of the system is of the master-slave type and is based on two independent processors (CPU) A and B, provided with respective power supplies 1A, 1B and connected by a rapid communication channel 2 to a communication memory M of the random access (RAM) type having dual arbitration gates.

The software architecture of the system mirrors the architecture of the hardware and is based on equivalent programs run on the two processors A and B.

The processors A and B are connected to an electrohydraulic unit designated in general by the letter C, which controls a hydraulic actuator H.

In the embodiment illustrated, the actuator H is a double-acting cylinder having a casing 3 in which there is slidably mounted in a sealed manner a piston 4 having a traversing rod or shaft 5, the opposite ends 5A, 5B of which extend to the exterior of the casing 3 and are mechanically connected to the stub axles of the rear wheels of a motor vehicle in order to control the steering thereof. Two helical springs 6 and 7 are housed in the interior of the casing 3 of the actuator H, disposed on opposite sides with respect to the piston 4.

Two position sensors designated by 8A and 8B respectively are associated with the ends 5A, 5B of the rod 5 of the actuator H.

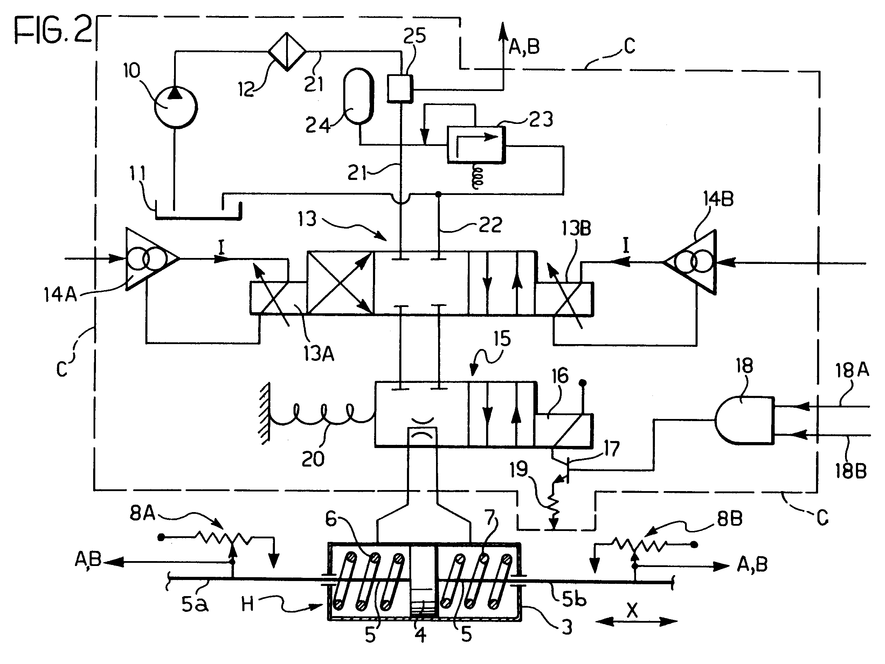

These sensors, which, in the embodiment shown in Figure 2, are of the potentiometer type, are connected both to the processor A and to the processor B.

As shown in Figure 2, the electrohydraulic control unit C comprises a hydraulic pump 10 which in its operation takes up a hydraulic fluid from a tank 11 and advances it via a delivery pipe 21 and a filter 12 to a four-way, three-position proportional solenoid valve designated in general by the reference numeral 13. This solenoid valve has two control solenoids 13A and 13B connected to the output of respective driver stages designated by 14A and 14B.

These driver stages are controlled by the processor A and the processor B respectively. In operation, the processors A and B provide respective control signals with pulses of modulated width (PWM) at the said driver stages 14A and 14B in order to drive the proportional solenoid valve 13.

A safety solenoid valve 15 is connected to this solenoid valve and, in the embodiment illustrated, is a four-way, two-position on/off valve having a control solenoid 16, the excitation of which is controlled by means of a transistor 17. The transistor 17 is a bipolar transistor of the npn type and its emitter is earthed by means of a resistor 19, the collector being connected to the solenoid 16 and the base connected to the output of an AND gate 18.

When the transistor T is cut off, the safety valve 15 is kept in the state shown in Figure 2 by the action of a spring 20. In this state, the safety valve 15 decouples the outputs of the proportional solenoid valve 13 from the inputs of the actuator H, and brings the inputs of the said actuator into communication with one another via a slotted internal passage. In this state, the piston 4 is brought to and maintained in a neutral position, corresponding to no steering of the rear wheels of the motor vehicle.

When the transistor 17 is rendered conductive, excitation of the solenoid 16 displaces the safety valve into its second position, in which it connects the inputs of the actuator H to the outputs of the proportional solenoid valve 13. The latter, according to the driver signals applied to its solenoids 13A and 13B by the stages 14A and 14B, connects the delivery pipe 21 to one or other of the inputs of the actuator H (via the safety valve 15). The other input of the actuator H is brought into communication with the return pipe 22 extending from the proportional solenoid valve back 13 to the tank 11. An accumulator 24 is also connected to the pipe 22 by means of a pressure regulating valve 23.

A sensor 25 is disposed along the delivery pipe 21, downstream of the filter 12, which in operation sends to the processors A and B electric signals indicating the pressure of the fluid flowing towards the proportional solenoid valve 13.

The logic AND gate 18 which controls the transistor 17 has two inputs 18A and 18B connected to the processor A and the processor B respectively. The inputs 18A and 18B in fact represent the enabling inputs of the entire electrohydraulic unit C. When the processors A and B both send signals on logic level "1" to the said inputs, the transistor 17 remains conductive and the safety valve 15 is disposed in the position in which it couples the proportional solenoid valve 13 to the actuator H, thus allowing for steering of the rear wheels. If as will be clearer from the following, as a result of the detection of a breakdown, one of the processors A, B sends a signal on level "O" to an input of the logic AND gate 18, the transistor 17 is cut off and the safety valve 15 is disposed in the state shown in Figure 2. The actuator H is decoupled from the proportional solenoid valve 13 and is brought into the neutral state.

As shown in Figure 1, sensor devices are also connected to the processors A and B, represented in their entirety by the block designated by the reference numeral 30 in this drawing. These sensors comprise, for example, a sensor for the steering angle of the wheel, a sensor for the speed of the motor vehicle, a sensor for the acceleration of the vehicle and a gyrometer.

On the basis of the information provided by the sensors 30, the processors A and B in operation calculate the position into which the piston 4 of the actuator H is to be brought in order to steer the rear wheels to the required extent. This position of the piston will be referred to in the following description as the "desired position".

If the control system for the steering of the rear wheels is completely efficient, the processors A and B apply enabling signals on level "1" to the logic AND gate 18 so that the transistor 17 remains conductive and the safety valve 15 is disposed in the position in which it couples the proportional solenoid valve 13 to the actuator H.

In order to bring the piston 4 of the actuator H into the desired position, the processors A and B send modulation control signals PWM to the driver stages 14A and 14B respectively, so as to vary the position of the piston 4 as required to reach the desired position. The position of this piston is detected by the processors A and B by means of the signals provided by the position sensors 8A and 8B.

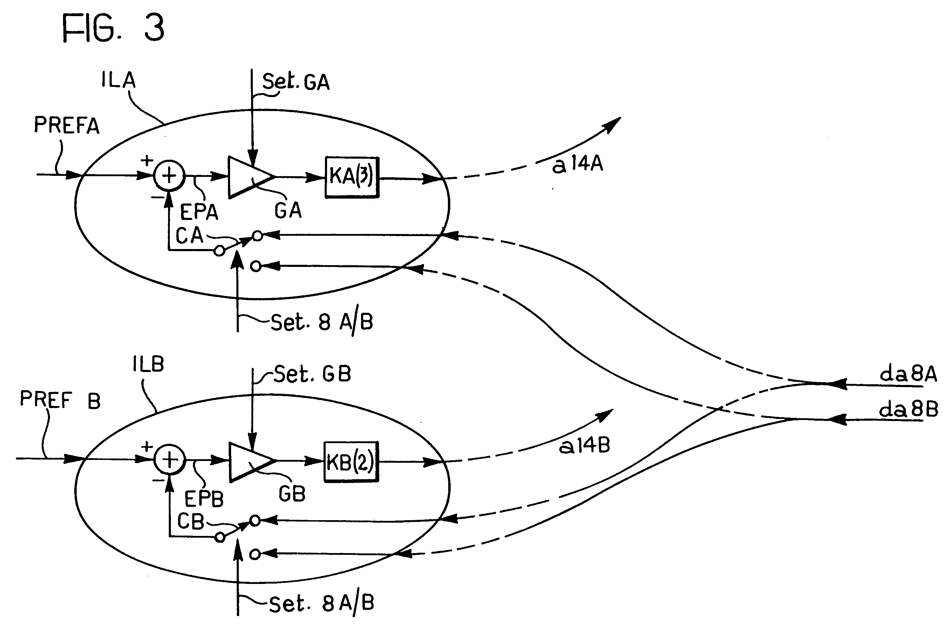

Therefore, under these conditions, the processors A and B effect a reaction loop control function according to the functional diagrams given by way of example in Figure 3. This drawing shows the two functional loops ILA and ILB of the control effected by the processors A and B. The two control loops provide as the input magnitude the desired reference position PREFA, PREFB for the piston of the actuator H. The actual position of the piston of the actuator H detected by the sensors 8A and 8B is added to this input magnitude with a negative sign. The position errors EPA and EPB are determined in this manner, representing the input magnitudes of two gain blocks GA and GB respectively, followed by two blocks KA(s) and KB(s) which effect a predetermined transfer function which links the position error with the modulation of the current in PWM which must be applied by means of the driver stages 14A and 14B to the solenoids 13A and 13B respectively of the proportional solenoid valve 13.

The gain of the functional blocks GA and GB can be modified, under the circumstances which will be described hereinafter, as indicated by the arrows setGA and setGB of Figure 3. The system is effected in particular in such a manner that, reducing the gain of the functional block GB (or the block GA) to zero and increasing the gain of the functional block GA (GB) in a corresponding manner, the proportional solenoid valve 13 can be driven exclusively by the single driver stage 14A (14B). This state is effected by the processors A and B when, in the manner that will be described hereinafter, they detect a state of breakdown in the driver stage 14B (14A).

When both of the position sensors 8A and 8B are operating correctly, the processor A effects control according to the functional diagram of Figure 3, using the information provided by the position sensor associated therewith, that is, the position sensor 8A. Similarly, the processor B effects control on the basis of the information provided by the position sensor 8B associated therewith.

If, however, in operation the said processors detect a state of breakdown of one of the two position sensors, they continue to control both based on the information provided by the still efficient position sensor (surviving sensor). This possibility is illustrated functionally in Figure 2 by means of two changeover switches CA and CB which, under normal conditions, connect the sensors 8A and 8B respectively to the corresponding node. In the event of breakdown of one of the two sensors, the processor which is normally associated with the sensor in a state of breakdown, switches to the surviving sensor, as is indicated functionally by the arrows set8A/B in the diagram of Figure 3.

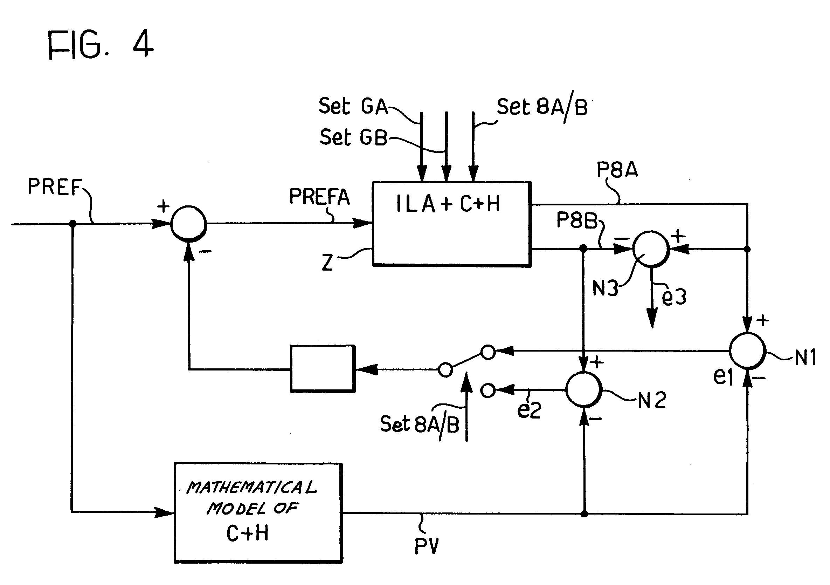

The processors A and B are moreover adapted to effect control action according to an external loop functional configuration with respect to the control loops of the functional diagram of Figure 3. Figure 4 shows the functional diagram of the external control loop effected by one of the two processors, for example, processor A. In Figure 4, the functional block designated by the letter Z indicates the assembly comprising the internal control loop ILA (Figure 3) relative to the processor A, the electrohydraulic control unit C and the actuator H.

The functional block Z has as the input magnitude the desired reference position of the piston of the actuator H, designated by PREFA and in output the actual positions detected by the sensors 8A and 8B. These actual positions are designated by P8A and P8B respectively. These two magnitudes provide for three algebraic sum nodes, designated by N1, N2 and N3.

At the output of the node N3 there is an error signal E3 = P8A - P8B which, compared with a predetermined threshold value, allows the processor to evaluate the congruence of the position information provided by the two sensors. When the error E3 exceeds the predetermined threshold, the processor deduces that one of the two position sensors is in a state of breakdown. The processor can determine which of the two sensors is in a state of breakdown in the following manner.

A mathematical model of the assembly consisting of the electrohydraulic control unit C and the actuator H is stored in the processor.

In operation, on the basis of the signals provided by the sensors 30, the processor calculates a reference position PREF to be reached by the movable element 4 of the actuator H. On the basis of this reference position PREF and of the mathematical model of the assembly of the unit C and the actuator H, the processor calculates the theoretical position PV (Figure 4) which should be assumed by the piston of the actuator H. This theoretical position is provided at the sum nodes N1 and N2. At the output of the sum node N1 there is therefore an error E1 = P8A - PV, and at the output of the node N2 there is an error E2 = P8B - PV, which are compared with respective predetermined thresholds.

4

The three error signals E1, E2 and E3 made available in this manner make it possible to evaluate the method of operation of the control system. If these errors are assigned the value "1" and the value "0" when they exceed or remain below the threshold values respectively associated therewith, the various possible states which may occur in operation are summarised in the following table:

TABLE

| E1 | E2 | E3 | |
|----|----|----|----|
| 0 | 0 | 0 | everything operating well |
| 0 | 0 | 1 | information from the sensors incongruous |
| 0 | 1 | 0 | impossible state |
| 0 | 1 | 1 | faulty sensor 8B |
| 1 | 0 | 0 | impossible state |
| 1 | 0 | 1 | faulty sensor 8A |
| 1 | 1 | 0 | faulty actuator H/unit C |
| 1 | 1 | 1 | faulty sensors and/or actuator H/unit C |

Therefore, by studying the errors E1, E2 and E3, it is possible to determine possible breakdown of the sensors and/or the actuator and the associated electrohydraulic control unit.

In the event of breakdown of a sensor, the processor, by means of the control set 8A/B, excludes the sensor in a state of breakdown and continues control based on the information provided by the other sensor.

In the case of the last two situations indicated in the preceding table relating to possible breakdown of the actuator and the associated electrohydraulic control unit, the processor which detects it takes the enabling signal to the corresponding input of the logic gate 18, cutting off the transistor 17 and operating the safety solenoid valve 15 in order to bring the actuator H into the neutral state of no steering of the rear wheels. In this case, only the front wheels of the motor vehicle can be steered.

Therefore, the system operates under conditions of inherent safety.

The control effected according to the functional diagram of Figure 4 is of the "model following" type.

As, in general, the characteristics of the actuator and the associated electrohydraulic control unit vary according to the variation in the dynamics of the control signal, there is in fact no single input/output mathematical model of this assembly which can be used under any operating conditions. The adoption of a single mathematical model could therefore make less precise the determination of possible malfunction or breakdown of the system.

In order to overcome this disadvantage, not one, but a plurality of mathematical models are advantageously stored in the processors, each of which is provided for use in different contexts (dynamic fields). The selection of the model to be used in each case is effected by means of a predetermined deciding criterion, based, for example, on the dynamics of the control signal. This solution makes it possible to adopt the best mathematical model in each case.

Of course, while adhering to the principle of the invention, the embodiments and the features may be varied considerably with respect to those described and illustrated purely by way of non-limiting examples.

## Claims

1. System for the inherently safe control of the steering of the rear wheels of a motor vehicle, comprising:
   - actuator means (H) including a movable element (4) adapted to steer the said wheels;
   - electric control means (C) associated with the said actuator means (H) and adapted to displace the said movable element (4), the said control means (C) comprising first and second driver stages (14A, 14B) adapted to effect, together or separately, the controlled activation of the said actuator means (H) according to the characteristics of first and second control signals respectively applied to their respective inputs, the said control means (C) further comprising safety means (15-20) adapted to displace and maintain the said movable element (4) in a predetermined neutral position, corresponding to no steering of the said wheels, when one enabling signal fails to reach an enabling input (18) of the said control means (C);
   - first and second position sensors (8A, 8B) adapted to provide respective electric signals indicating the actual position of the said movable element (4), and

- first and second electronic processing and control means (A, B), independent from one another, coupled by a communication channel (2, M), and connected to the said first and second driver stages (14A, 14B) respectively, to the enabling input (18) of the control means (C) and to both of the position sensors (8A, 8B), each of the said first and second processing and control means (A, B) being adapted to:
- receive the signals provided by the said position sensors (8A, 8B) and verify the congruence thereof;
- compare the position information (P8A, P8B) provided by each position sensor (8A, 8B) with a theoretical position (PV) calculated on the basis of the desired position (PREF) of the said movable element (4) according to a mathematical model of the said control means (C) and the said actuator means (H) stored in each of the said processing and control means (A, B);
- detect, on the basis of the said verification and the said comparison, possible breakdown of one of the said sensors (8A, 8B) and/or one of the said driver stages (14A, 14B) and/or the said actuator means and the associated control means (H, C);
- provide at the associated driver stage (14A, 14B) a respective control signal generated according to the difference between a reference position (PREFA, PREFB) of the said movable element (4) and its actual position (P8A, P8B ) detected by the respective associated position sensor (8A, 8B) when the said position sensors (8A, 8B) are operating correctly, and generated according to the difference between the said reference position and the actual position detected by the surviving sensor when one of the said sensors (8A, 8B) is in a state of breakdown;
- disable the driver stage which may be in a state of breakdown and, in this case, control the actuator solely by means of the surviving driver stage, and
- interrupt the enabling signal at the said control means (C) if a state of breakdown of the said control system and/or the said actuator means is detected.

2. System according to Claim 1, characterised in that the said actuator means comprise a double-acting cylinder (H, 3-7).

3. System according to Claim 2, characterised in that the said control means comprise
   - a source of pressurised fluid (10),
   - a proportional solenoid valve (13) provided with two control solenoids (13A, 13B) controlled by the said first and second driver stages (14A, 14B) respectively, the said proportional solenoid valve (13) being interposed between the said source (10) and the said double-acting cylinder (H).

4. System according to Claim 3, characterised in that the said safety means comprise a solenoid valve (15) interposed between the said proportional solenoid valve (13) and the double-acting cylinder (H) and adapted to assume selectively a first state or a second state, in which it respectively makes possible and prevents coupling of the said proportional solenoid valve (13) and the double-acting cylinder (H).

**Patentansprüche**

1. System zur inhärent sicheren Steuerung der Lenkung der Hinterräder eines Kraftfahrzeugs, umfassend:
   - Stellmittel (H) mit einem beweglichen Element (4), welches dazu ausgelegt ist, die Räder zu lenken,
   - den Stellmitteln (H) zugeordnete elektrische Sternermittel (C), welche dazu ausgelegt sind, das bewegliche Element (4) zu verstellen, wobei die Steuermittel (C) erste und zweite Treiberstufen (14A, 14B) umfassen, welche dazu ausgelegt sind, gemeinsam oder getrennt die gesteuerte Aktivierung der Stellmittel (H) entsprechend den Eigenschaften von ersten und zweiten, jeweils an deren jeweilige Eingänge angelegten Steuersignalen zu bewirken, wobei die Steuermittel (C) weiterhin Sicherheitsmittel (15 - 20) umfassen, welche dazu ausgelegt sind, das bewegliche Element (4) in eine vorbestimmte, keiner Lenkung der Räder entsprechende Neutralstellung zu verstellen und dort zu halten, wenn ein Freigabesignal einen Freigabeeingang (18) der Steuermittel (C) nicht erreicht,
   - erste und zweite Stellungssensoren (8A, 8B), die jeweils dazu ausgelegt sind, elektrische Signale bereitzustellen, welche die tatsächliche Stellung des beweglichen Elements (4) anzeigen, und
   - erste und zweite elektronische Verarbeitungs- und Steuermittel (A, B), die voneinander unabhängig sind, durch einen Verbindungskanal (2, M) gekoppelt sind und mit den ersten bzw. zweiten Treiberstufen (14A, 14B), dem Freigabeeingang (18) der Steuermittel (C) und den beiden Stellungssensoren (8A, 8B) verbunden sind,
wobei die ersten und zweiten Verarbeitungs- und Steuermittel (A, B) jeweils dazu ausgelegt sind:
- die von den Stellungssensoren (8A, 8B) bereitgestellten Signale zu empfangen und deren Übereinstimmung zu verifizieren,
- die von jedem Stellungssensor (8A, 8B) bereitgestellten Stellungsinformationen (P8A, P8B) mit einer theoretischen Stellung (PV) zu vergleichen, welche auf der Grundlage der gewünschten Stellung (PREF) des beweglichen Elements (4) gemäß einem in jedem der Verarbeitungs- und Steuermittel (A, B) gespeicherten mathematischen Modell der Steuermittel (C) und der Stellmittel (H) berechnet wird,
- auf der Grundlage der Verifikation und des Vergleichs eine mögliche Störung eines der Sensoren (8A, 8B) und/oder einer der Treiberstufen (14A, 14B) und/oder der Stellmittel und der zugehörigen Steuermittel (H, C) zu erfassen,
- an die zugeordnete Treiberstufe (14A, 14B) ein jeweiliges Steuersignal zu liefern, welches entsprechend der Differenz zwischen einer Referenzstellung (PREFA, PREFB) des beweglichen Elements (4) und dessen tatsächlicher, durch den jeweils zugeordneten Stellungssensor (8A, 8B) erfaßten Stellung (P8A, P8B) erzeugt wird, wenn die Stellungssensoren (8A, 8B) ordnungsgemaß arbeiten, und welches entsprechend der Differenz zwischen der Referenzstellung und der tatsächlichen, durch den übrig bleibenden Sensor erfaßten Stellung erzeugt wird, wenn einer der Sensoren (8A, 8B) sich in einem Störungszustand befindet,
- diejenige Treiberstufe, die sich in einem Störungszustand befinden kann, abzuschalten und in diesem Fall das Stellglied nur mit Hilfe der übrig bleibenden Treiberstufe zu steuern, und
- das Freigabesignal an den Steuermitteln (C) zu unterbrechen, wenn ein Störungszustand des Steuersystems und/oder der Stellmittel erfaßt wird.

2. System nach Anspruch 1, dadurch gekennzeichnet, daß die Stellmittel einen doppeltwirkenden Zylinder (H, 3 - 7) umfassen.

3. System nach Anspruch 2, dadurch gekennzeichnet, daß die Steuermittel umfassen:
- eine Quelle (10) eines unter Druck stehenden Fluids,
- ein Proportional-Magnetventil (13), das mit zwei Steuer-Elektromagneten (13A, 13B) versehen ist, welche durch die erste bzw. zweite Treiberstufe (14A, 14B) gesteuert werden, wobei das Proportional-Magnetventil (13) zwischen der Quelle (10) und dem doppeltwirkenden Zylinder (H) angeordnet ist.

4. System nach Anspruch 3, dadurch gekennzeichnet, daß die Sicherheitsmittel ein zwischen dem Proportional-Magnetventil (13) und dem doppeltwirkenden Zylinder (H) angeordnetes Magnetventil (15) umfassen, welches dazu ausgelegt ist, wahlweise einen ersten Zustand oder einen zweiten Zustand anzunehmen, in welchem es die Kopplung des Proportional-Magnetventils (13) und des doppeltwirkenden Zylinders (H) ermöglicht bzw. verhindert.

**Revendications**

1. Système de contrôle de sécurité inhérente de la direction des roues arrière d'un véhicule automobile, comprenant :
- un moyen d'actionnement (H) comprenant un élément déplaçable (4) adapté pour diriger lesdites roues;
- un moyen de commande électrique (C) associé audit moyen d'actionnement (H) et adapté pour déplacer ledit élément déplaçable (4), ledit moyen de commande (C) comprenant des premier et deuxième étages d'entraînement (14A, 14B) adaptés pour effectuer, conjointement ou séparément, l'actionnement commandé dudit moyen d'actionnement (H) en fonction des caractéristiques de premier et deuxième signaux de commande respectivement appliqués à leur entrées respectives, ledit moyen de commande (C) comprenant en outre des moyens de sécurité (15 à 20) adaptés pour déplacer et maintenir ledit élément déplaçable (4) dans une position neutre prédéterminée, correspondant à une absence de direction desdites roues, lorsqu'un signal de validation ne parvient pas à atteindre une entrée de validation (18) dudit moyen de commande (C);

7

- des premier et deuxième capteurs de position (8A, 8B) adaptés pour fournir des signaux électriques respectifs indiquant la position réelle dudit élément déplaçable (4), et

- des premier et deuxième moyens de traitement électronique et de commande (A, B), indépendants l'un de l'autre, couplés par un canal de communication (2, M), et respectivement connectés auxdits premier et deuxième étages d'entraînement (14A, 14B), à l'entrée de validation (18) du moyen de commande (C) et aux deux capteurs de position (8A, 8B),

  chacun desdits premier et deuxième moyens de traitement et de commande (A, B) étant adaptés pour :

- recevoir les signaux fournis par lesdits capteurs de position (8A, 8B) et vérifier leur conformité;

- comparer l'information de position (P8A, P8B) fournie par chaque capteur de position (8A, 8B) avec une position théorique (PV) calculée sur la base de la position souhaitée (PREF) dudit élément déplacable (4), selon un modèle mathématique dudit moyen de commande (C) et dudit moyen d'actionnement (H) stocké dans chacun des moyens de traitement et de commande (A, B);

- détecter, sur la base de ladite vérification et de ladite comparaison, une défaillance possible de l'un desdits capteurs (8A, 8B) et/ou l'un desdits étages d'entraînement (14A, 14B) et/ou ledit moyen d'actionnement et le moyen de commande (H, C) associé:

- fournir, à l'étage d'entraînement (14A, 14B) associé, un signal de commande respectif produit selon la différence entre une position de référence (PREFA, PREFB) dudit élément déplaçable (4) et sa position réelle (P8A, P8B) détectée par le respectif capteur de position (8A, 8B) associé, lorsque lesdits capteurs de position (8A, 8B) fonctionnent correctement, et produit selon la différence entre ladite position de référence et la position réelle détectée par le capteur survivant, lorsque l'un desdits capteurs (8A, 8B) se trouve dans un état de défaillance;

- mettre hors service l'étage d'entraînement qui peut se trouver dans un état de défaillance et, dans le cas, commander l'organe d'actionnement seulement au moyen de l'étage d'entraînement survivant, et

- interrompre le signal de validation au niveau dudit moyen de commande (C), si un état d'arrêt dudit système de commande et/ou dudit moyen d'actionnement est détecté.

2. Système selon la revendication 1, caractérisé en ce que ledit moyen d'actionnement comprend un cylindre à double action (H, 3 à 7).

3. Système selon la revendication 2, caractérisé en ce que ledit moyen de commande comprend
   - une source de fluide pressurisé (10),
   - une électrovanne proportionnelle (13) pourvue deux solénoïdes de commande (13A, 13B) respectivement commandés par lesdits premier et deuxième étages d'entraînement (14A, 14B), ladite électrovanne proportionnelle (13) étant disposée entre ladite source (10) et ledit cylindre à double action (H).

4. Système selon la revendication 3, caractérisé en ce que ledit moyen de sécurité comprend une électrovanne (15) disposée entre ladite électrovanne proportionnelle (13) et le cylindre à double action (H) et adaptée pour occuper sélectivement un premier état ou un deuxième état, dans lequel il permet et empêche respectivement le couplage de ladite électrovanne proportionnelle (13) et du cylindre à double action (H).

FIG. 1

FIG.2

## FIG. 3

EP 0 526 418 B1

FIG. 4

Set 8A/B

Set GA
Set GB

ILA + C+H

PREFA

Z

P8A

P8B

PREF

+
−

N1
+  −
e1

+
e3
−
N3

N2
+  −
e2

Set 8A/B

PV

MATHEMATICAL MODEL OF C+H